# EUROPEAN PATENT APPLICATION

(11) **EP 3 154 119 A1**
(43) Date of publication of application: **12.04.2017**
(21) Application number: 15465547.6
(22) Date of filing: 09.10.2015
(51) Int. Cl.: H01M 10/44, G01R 31/36, H02J 7/00, B60L 11/18

(54) **SYSTEM AND METHOD FOR BATTERY CHARGING**

(71) Applicant: Continental Automotive GmbH, 30165 Hannover (DE)
(72) Inventor: Laiu, Cristian, 300351 Timisoara (RO); Uritescu, Valentin, 307220 Giroc (RO)

(57) **Abstract**

A method for charging a battery (1), which can be charged to a maximum voltage, comprises performing a charging cycle, the charging cycle comprising a first predetermined time interval and a second predetermined time interval. During the first time interval the battery (1) is charged. During the second time interval no charging of the battery (1) occurs, a present battery voltage is determined and the determined battery voltage is compared to a threshold voltage which is lower than the maximum voltage. A further charging cycle is performed, if the determined battery voltage is lower than the threshold voltage.

## Description

The current invention refers to a system and a method for battery charging, particularly for charging of lithium-ion batteries.

Rechargeable lithium-ion (li-ion) batteries are used for many different applications, e.g. in consumer and automotive electronics. For example, a li-ion battery may be used for powering a so-called on-board unit. In many countries all over the world there are toll roads (also known as turnpikes or tollways), for which a fee (or toll) is assessed for passage. Different systems for collecting the toll are known, for example electronic road toll systems. In electronic road toll systems an on-board unit is installed in the vehicle to determine the position of the vehicle and transmit position data to a central office for billing.

In li-ion batteries, lithium ions move from a negative electrode to a positive electrode during discharge and from the positive electrode to the negative electrode when charging. Several charging mechanisms and devices are known. In some applications, e.g. automotive applications, temperatures inside a device may rise to 80 °C and more. Such high temperatures may damage the li-ion battery. In some cases this may lead to a reduced battery lifetime, whereas in other applications the batteries may be more severely damaged, e.g. the battery may explode.

The problem to be solved by the current invention is, therefore, to provide a system and a method for charging a battery to reduce the damaging effects of high ambient temperatures.

This problem is solved by a method according to claim 1 and a system according to claim 11. Configurations and further developments of the invention are subject of the dependent claims.

A method for charging a battery which can be charged to a maximum voltage comprises performing a charging cycle, the charging cycle comprising a first predetermined time interval and a second predetermined time interval, wherein during the first time interval the battery is charged, during the second time interval no charging of the battery occurs, a present battery voltage is determined and the determined battery voltage is compared to a threshold voltage which is lower than the maximum voltage, and performing a further charging cycle, if the determined battery voltage is lower than the threshold voltage.

In this way a charging of the battery to the maximum voltage may be prevented.

The method may further comprise to stop charging the battery if the present voltage is equal to or greater than the threshold voltage.

Charging the battery from a completely discharged state to the maximum voltage may take a first charging time, wherein the first predetermined time interval is shorter than the first charging time.

The first charging time may be more than one hour. The first predetermined time interval may be less than 10 seconds. The first predetermined time interval may be less than 1 second. The second predetermined time interval may be shorter than the first predetermined time interval. The second predetermined time interval may be less than one second. The threshold voltage may be 0.1 V less than the maximum voltage. The maximum voltage may be 4.2 V and the threshold voltage may be 4.1 V. In this way the battery may be prevented from being charged up to the maximum voltage. The battery is rather charged to a voltage below the maximum voltage to prevent damages of the battery.

A system for charging a battery comprises a charging unit. The charging unit is configured to charge the battery during a first predetermined time interval, to interrupt charging the battery during a second predetermined time interval, the first time interval and the second time interval representing a charging cycle, to determine a present battery voltage during the second predetermined time interval and to compare the present battery voltage to a threshold voltage, wherein the threshold voltage is less than the maximum voltage, and to perform a further charging cycle if the present battery voltage is less than the threshold voltage.

The battery may be a lithium-ion battery.

Examples are now explained with reference to the drawings. In the drawings the same reference characters denote like features.
Figure 1 schematically illustrates in a block diagram an example of a battery charging circuit,
Figure 2 schematically illustrates in a diagram an example of a charging current in a battery charging circuit according to the present invention,
Figure 3 illustrates an example of a method for charging a battery according to the present invention,
Figure 4 schematically illustrates a software module for performing a method for charging a battery according to the present invention, and
Figure 5 illustrates in a sequence diagram the interaction of objects in a software module for performing a method for charging a battery according to the present invention.

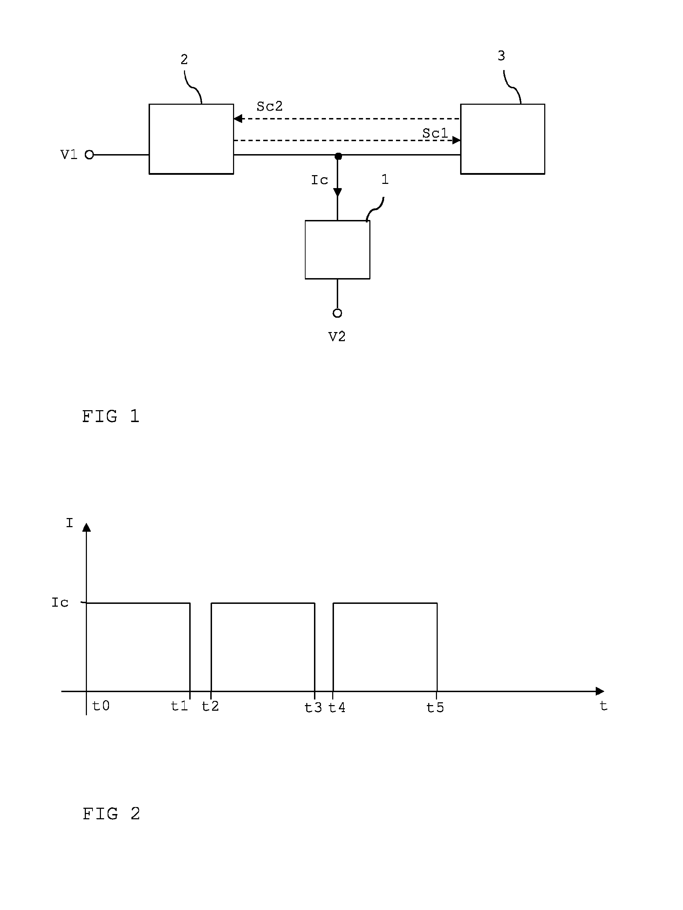

Figure 1 illustrates an example of a battery charging circuit. The circuit includes a chargeable battery 1, a charging unit 2 and a controller unit 3. The controller unit 3 may include at least one microcontroller, for example, as well as other components such as a power path management IC (integrated circuit), for example. With a first input, the charging unit 2 is coupled to a terminal for a first potential V1. The first potential V1 may be a positive potential. For example, the first potential V1 may be 5 V. With a second input, the charging unit 2 is coupled to the controller unit 3. The battery 1 is coupled between a terminal for a second potential V2 and a common node between the charging unit 2 and the controller unit 3. The second potential may be a reference potential, such as ground, for example.

The charging unit 2 provides a charging current Ic to the battery 1, when charging is required or requested by a user, for example. A charging unit 2 generally fully charges the battery 1. If, for example, a 4.2 V battery 1 is used in a device, which means that the battery 1 may be charged up to a maximum voltage of 4.2 V, the battery 1 will usually be fully charged to 4.2 V. The charging current Ic may be 1.5 A, for example. This is, however, only an example. Depending on the battery 1 and the charging unit 2, the charging current Ic may be higher or lower than 1.5 A. When the battery voltage reaches the maximum voltage (e.g. 4.2 V), the charging current Ic decreases with time. If, for example, a dedicated charging IC is used within the charging unit, the charging current Ic will be automatically decreased by the charging IC, for example. When the charging current Ic falls below a certain threshold, the charging will be stopped. The maximum battery voltage should not be exceeded, in order not to destroy the battery 1.

Known charging ICs usually provide a so-called trickle current to the battery 1. The trickle current may be in the range of some mA, for example. The charging IC monitors the battery voltage. If, even if no load is currently supplied by the battery 1, the battery discharges (so-called self-discharge), the charging IC will try to keep the battery 1 fully charged.

The charging unit 2 may therefore monitor the charging current Ic and stop charging, when the charging current Ic indicates that the battery 1 is fully charged. The charging unit 2 may further signal to the controller unit 3 when it is charging the battery 1. For example, a signal Sc1 may be output to the controller unit 3, while the battery 1 is charged. It may, however, also be the controller unit 3, which instructs the charging unit 2 to charge the battery 1. The controller unit 3, therefore, may output a signal Sc2 to the charging unit 2, which enables charging of the battery 1. The charging unit 2 may further monitor the temperature of the battery 1. High temperatures may lead to a damage of the battery 1. Therefore, the charging current Ic may be reduced or the charging may be completely stopped, when the temperature of the battery 1 exceeds a certain threshold temperature.

Another problem, which may arise when using li-ion batteries, is the so-called deep-discharge. Deep-discharge means that the battery is completely discharged to below a certain threshold, e.g. to below 1 %. This may lead to irreversible damage of the battery 1. Many charging circuits, therefore, include a deep-discharge protection circuit (not illustrated). A deep-discharge protection circuit may monitor the battery voltage and disconnect any loads (not illustrated in Figure 1), which are powered by the battery 1, when the battery voltage falls below a certain threshold.

As has already been described above, high temperatures may lead to irreversible damages of the battery 1. The temperature of the battery 1 may rise, because of the charging process itself. The battery temperature, however, may also rise due to high ambient temperature. Especially in automotive applications, there is often a higher risk for high ambient temperatures. High temperatures will more likely lead to battery damages, when the battery 1 is fully charged. When the battery 1 is not charged to its maximum voltage, damages at high temperatures may be less.

Therefore, according to the present invention, the battery 1 will not be fully charged to its maximum voltage. The battery 1 will only be charged to a threshold voltage which lies below the maximum voltage. If, for example, the maximum voltage of the battery 1 is 4.2 V, it may only be charged to a voltage of 4.1 V. In some applications, e.g. automotive applications, temperatures of 80 °C and higher may arise. If a 4.2 V battery 1 is completely charged to 4.2 V, temperatures of 80 °C may cause severe damage of the battery. If the battery 1 is only charged to about 4.1 V, generally no, or at least less, damages will be caused at temperatures of 80 °C. This is, however, only an example. The battery 1 may be charged to any other voltage below the maximum voltage.

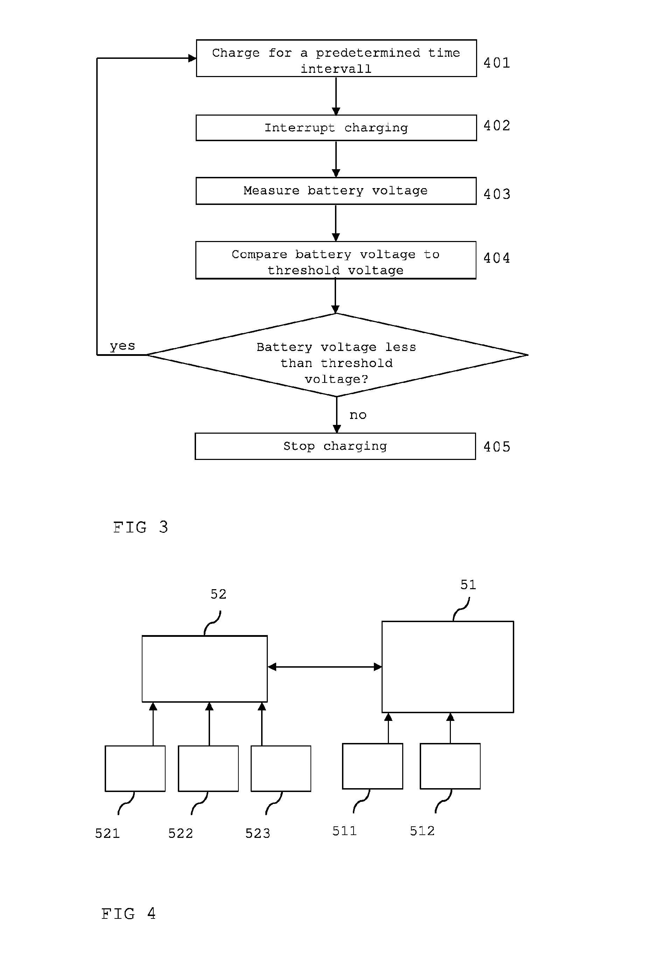

In order to stop charging at a certain voltage below the maximum voltage of the battery 1, the battery 1 is charged in cycles. This is illustrated by means of Figure 2, which exemplary shows the charging current Ic over time. The battery 1 may be charged for a first time interval t0 - t1. Charging may then be interrupted. If the battery 1 is not yet charged to the threshold voltage, it will be charged for a further time interval t2 - t3. This will be repeated until the battery voltage reaches or exceeds the maximum voltage. In Figure 3 the maximum voltage is reached at time instant t5. Therefore, charging is stopped at time instant t5 in the given example.

Charging a completely discharged li-ion battery to its maximum voltage generally takes several hours (maximum charging time), e.g. two hours. The charging intervals may be short compared to the maximum charging time. For example, a charging interval may last several seconds, e.g. 5 s, or several milliseconds, e.g. 4.5 ms. Charging may be interrupted for an even shorter time. An interruption may last about Is or only 100 milliseconds or less, for example. The interruption may be just long enough to measure the battery voltage and compare it to the threshold voltage. This is generally dependent on the components which are used. For example, some controllers may be faster than others. Either the charging unit 2 or the controller 3 may perform the measurement of the battery voltage.

As the charging intervals are relatively short compared to the maximum charging time, charging can be stopped fairly precisely when the predetermined threshold voltage is reached.

A method for charging a chargeable battery according to the present invention is illustrated in Figure 3. The method includes charging the battery for a predetermined charging interval (step 401). The charging is then interrupted (step 402). While the charging is interrupted, the present battery voltage is measured (step 403) and compared to a predetermined threshold voltage (step 404). The threshold voltage is less than the maximum voltage of the battery (e.g. less than 4.2 V). If the present battery voltage is less than the threshold voltage, the cycle is repeated and the battery charged again for another charging interval (step 401). If the present battery voltage is equal to or higher than the threshold voltage, charging is stopped (step 405). In this way, the battery will not be charged to its maximum voltage and damages will be less likely, even at high temperatures.

By applying the method according to the present invention, the battery charger becomes very flexible. The method can be implemented by software and the threshold voltage may be adjusted according to the battery to be charged. If, for example, a 4.2 V battery is charged, the threshold voltage may be set to 4.1 V, whereas the threshold voltage may be set to 3.6 V, if a 3.7 V battery is charged.

One embodiment of a software module implementation of the current method is illustrated by means of Figure 4. The components illustrated in Figure 4 may be the system's classes. The components, or classes, may have different attributes. A processing module 51 (DeltaComputer) may receive different parameters from a delta module 511 (DeltaParameters) and a parameter module 512 (AccumulatorParameters). The processing module 51 may implement the algorithms for computing the battery voltage. The real voltage may be different from the actually measured voltage. The processing module 51 may consider a dynamic delta voltage which is added to the measured voltage to obtain a virtual battery voltage. The virtual battery voltage represents a result of the battery temperature, ageing of the battery and charging coefficients summed with the measured battery voltage. The dynamic delta voltage may be measured at predefined time instances.

The parameter module 512 may, for example, contain parameters such as the battery voltage and the battery temperature. It may further contain a terminal 30 (vehicle battery supply) status, e.g. connected or not connected. Based on the current parameters as well as on previous parameters, a terminal 30 transition can be detected. A terminal 30 transition may trigger a determination of a new delta voltage.

The delta module 511 contains the most recent delta parameters which are used for computing the dynamic delta voltage, which is required for computing the virtual voltage. The delta module 511 represents a data container which encapsulates different parameters.

Different methods may be performed by the software module. A first method getVirtualVoltage may return a current virtual voltage and may compute new delta parameters when a transition of terminal 30 is detected. A second method init may initialize the internal variable with different values. The delta buffers and delta parameters may be extracted. A third method resume may reset filtering counters and may deactivate a battery voltage filtering. A fourth method computeVirtualVoltage may be used internally only to compute the virtual voltage. The virtual voltage may be equal to the real voltage if the terminal 30 status is ON (vehicle battery connected). The virtual voltage may be equal to the difference between the real voltage and the dynamically computed delta voltage if the terminal 30 status is OFF (vehicle battery not connected). A fifth method computeDeltaFunction may be used internally to compute the dynamic delta voltage as a function of the battery temperature. Depending on the battery temperature, one of three sections of this function is selected. A first section may be constant, a second section may be linear and a third section may be exponential. The function may be calculated using the delta parameters and the battery temperature.

A sixth method verifyValueInRange may be a Boolean method which is used internally to verify if a value is within specified ranges. A seventh method verifyVoltageVariation may be an internal Boolean method which verifies if both the battery voltage and the voltage variation are valid. Firstly, the voltage should be in specified ranges. Secondly, the battery voltage level should be consistent with the terminal 30 status. This may be assured by verifying that significant variations between two voltage levels appear only when a transition of terminal 30 happens. An eight method verifyDeltaVariation may be an internal Boolean method which verifies if a new measured delta voltage is in specified ranges. For computing the thresholds it uses as a reference value the computed dynamic delta voltage, using the former delta parameters and the current battery temperature.

A ninth method verifyTerm30Transition may be an internal Boolean method which is used to detect a terminal 30 transition. The transition represents a change of status (ON->OFF or OFF->ON). A tenth method updateDeltaParameters may be used internally to update the delta parameters when a new delta voltage is measured at a terminal 30 transition. It adds the new delta voltage pair to the corresponding delta buffer and computes the new delta parameters. An eleventh method addElementInTheEnd may be an internal method which adds a new element in a delta buffer. If the current size exceeds the maximum length, the values are shifted to the left. In this way, only the most recent delta pairs are retained.

A twelfth method computeNewDeltaParameters may be an internal method which computes the delta parameters using delta temperature pairs from each delta buffer. It uses the arithmetical mean for the constant section and the so-called Linear Least Squares algorithm for computing the parameters for the linear and exponential sections of the function. A thirteenth method extractDeltaParameters may be an internal method for extracting the delta parameters from the configuration. A fourteenth method extractDeltaTemperaturePairs maybe an internal method which extracts the delta temperature pairs for a specified delta buffer.

Further methods perform the storing of the delta parameters and the delta buffers when new values are computed, the storing of the delta parameters and the storing of the elements of a delta buffer.

A peripheral module 523 (ComponentPeripheralDriver) may provide a battery voltage and a battery temperature to a voltage module 52 (AccumulatorVoltageDaemon). A driver module 522 may provide the terminal 30 status to the voltage module 52. Further, peripheral package 521 may be connected to the voltage module 52.

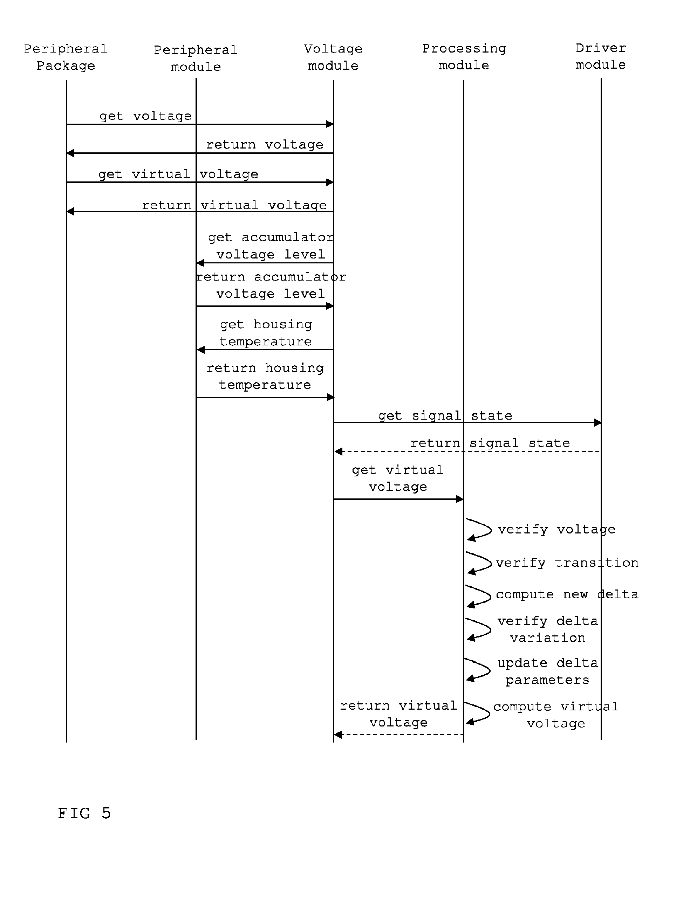

Now referring to Figure 5, the peripheral package 521 may send a command to get the battery voltage to the voltage module 52. The voltage module 52 may return the voltage. The peripheral package 521 may then send a command to get the virtual voltage to the voltage module 52. The voltage module 52 may return the virtual voltage. The voltage module 52 itself may then send a command to the peripheral module 523 to get the battery voltage level, the peripheral module 523 returning the requested value. The voltage module 52 then further requests and receives the temperature of a housing of the battery charging system. A signal state may be requested by the voltage module 52 from the driver module 522. The voltage module 52 may then request the virtual voltage from the processing module 51. Before returning the virtual voltage, the processing module 51 may first verify the battery voltage, verify the terminal 30 transition, compute new delta parameters, verify the delta variations, update the delta parameters and compute the virtual voltage.

### List of reference numbers

- 1: battery
- 2: charging unit
- 3: controller unit
- 51: processing module
- 511: delta module
- 512: parameter module
- 52: voltage module
- 521: peripheral package
- 522: driver module
- 523: peripheral module
- V1: terminal for a first potential
- V2: terminal for a second potential
- Ic: charging current
- Sc1, Sc2: signals

## Claims

1. Method for charging a battery (1), which can be charged to a maximum voltage, the method comprises:
performing a charging cycle, the charging cycle comprising a first predetermined time interval and a second predetermined time interval, wherein
during the first time interval the battery (1) is charged;
during the second time interval no charging of the battery (1) occurs, a present battery voltage is determined and the determined battery voltage is compared to a threshold voltage which is lower than the maximum voltage; and
performing a further charging cycle, if the determined battery voltage is lower than the threshold voltage.

2. Method according to claim 1, further comprising stop charging the battery (1), if the present voltage is equal to or greater than the threshold voltage

3. Method according to claim 1 or 2, wherein charging the battery (1) from a completely discharged state to the maximum voltage takes a first charging time, and wherein the first predetermined time interval is shorter than the first charging time.

4. Method according to claim 3, wherein the first charging time is more than one hour.

5. Method according to any of the preceding claims, wherein the first predetermined time interval is less than 10 seconds.

6. Method according to claim 5, wherein the first predetermined time interval is less than 1 second.

7. Method according to any of the preceding claims, wherein the second predetermined time interval is shorter than the first predetermined time interval.

8. Method according to claim 7, wherein the second predetermined time interval is less than one second.

9. Method according to any of the preceding claims, wherein the threshold voltage is 0.1V less than the maximum voltage.

10. Method according to any of the preceding claims, wherein the maximum voltage is 4.2 V and the threshold voltage is 4.1 V.

11. System for charging a battery (1), the system comprising a charging unit (2), wherein the charging unit (2) is configured to
charge the battery (1) during a first predetermined time interval;
interrupt charging the battery (1) during a second predetermined time interval, the first time interval and the second time interval representing a charging cycle,
determine a present battery voltage during the second predetermined time interval, and
compare the present battery voltage to a threshold voltage, wherein the threshold voltage is less than the maximum voltage; and
perform a further charging cycle if the present battery voltage is less than the threshold voltage.

12. System according to claim 11, wherein the battery (1) is a lithium-ion battery.
